# EUROPÄISCHE PATENTANMELDUNG

(11) **EP 3 470 715 A1**
(43) Veröffentlichungstag der Anmeldung: **17.04.2019**
(21) Anmeldenummer: 18198230.7
(22) Anmeldetag: 02.10.2018
(51) Int. Cl.: F16K 15/14, F16K 17/02

(54) **SICHERHEITSVENTIL**

(30) Priorität: 16.10.2017 DE 102017124020
(71) Anmelder: Grohe AG, 58675 Hemer (DE)
(72) Erfinder: Mainka, David, 58640 Iserlohn (DE); Heubrock, Dominik, 59387 Ascheberg (DE)

(57) **Zusammenfassung**

Die Erfindung betrifft ein Sicherheitsventil (1), insbesondere für eine Sanitärarmatur, mit einem Ventilgehäuse (2), das einen Druckraum (6) und einen Auslasskanal (9) aufweist, und einem elastischen Ventilelement (3), das den Druckraum (6) und den Auslasskanal (9) bei einem druckraumseitigen Normdruck eines Druckmediums voneinander trennt und bei Druckerhöhung derart elastisch verformbar ist, dass dieses bei einem Grenzdruck des Druckmediums einen den Druckraum (6) mit dem Auslasskanal (9) verbindenden Durchlasskanal (10) freigibt. Erfindungsgemäß ist es vorgesehen, dass das Sicherheitsventil (1) einen Spannmechanismus (12) zum Einstellen des Grenzdrucks aufweist, der das elastische Ventilelement (3) gegenüber dem Ventilgehäuse (2) mit einer Spannkraft (13) vorspannt.

## Beschreibung

Die vorliegende Erfindung betrifft ein Sicherheitsventil, insbesondere für eine Sanitärarmatur, mit einem Ventilgehäuse, das einen Druckraum und einen Auslasskanals aufweist, und einem elastischen Ventilelement, das den Druckraum und den Auslasskanal bei einem druckraumseitigen Normdruck eines Druckmediums voneinander trennt und bei Druckerhöhung derart elastisch verformbar ist, dass dieses bei einem Grenzdruck des Druckmediums einen den Druckraum mit dem Auslasskanal verbindenden Durchlasskanal freigibt.

Sicherheitsventile sind aus dem Stand der Technik hinlänglich bekannt und werden eingesetzt, um Systeme, die unter Druck stehen, vor zu hoher Belastung zu schützen.

Aus der EP 983 458 A1 ist ein Überdruckventil mit einem elastomeren Ventilelement bekannt. Das elastomere Ventilelement ist in einen Ventilkörper eingekapselt und umfasst eine trichterförmige Öffnung. Eine Durchflussöffnung erstreckt sich von der Öffnung ausgehend durch das elastomere Ventilelement. Wenn auf der der Öffnung gegenüberliegenden Seite des Ventilelements ein Überdruck entsteht, öffnet sich die Durchflussöffnung, so dass der Druck bzw. das darin angeordnete Fluid durch die Durchflussöffnung entweichen kann. Bei Normdruck bleibt die Durchflussöffnung derart verschlossen, dass das Fluid nicht entweichen kann. Nachteilig ist, dass die Einstellung des Grenzdrucks vom jeweils verwendeten Elastomer des elastomeren Ventilelements abhängig ist. Um den Grenzdruck an eine Anwendung anzupassen, muss das gesamte Überdruckventil bzw. zumindest das elastomere Ventilelement ausgetauscht werden.

Aufgabe der vorliegenden Erfindung ist es somit, ein Sicherheitsventil zu schaffen, dessen Grenzdruck individuell einstellbar ist.

Die Aufgabe wird gelöst durch ein Sicherheitsventil mit den Merkmalen des unabhängigen Patentanspruchs 1.

Vorgeschlagen wird ein Sicherheitsventil, insbesondere für eine Sanitärarmatur, mit einem Ventilgehäuse und einem elastischen Ventilelement. Das Ventilgehäuse weist einen Druckraum und einen Auslasskanal auf. Das elastische Ventilelement trennt den Druckraum und den Auslasskanal bei einem druckraumseitigen Normdruck eines Druckmediums voneinander. Bei einer Druckerhöhung ist das elastische Ventilelement derart elastisch verformbar, dass dieses bei einem Grenzdruck des Druckmediums einen den Druckraum mit dem Auslasskanal verbindenden Durchlasskanal freigibt. Das Sicherheitsventil weist einen Spannmechanismus zum Einstellen des Grenzdrucks auf. Der Spannmechanismus spannt das Ventilelement gegenüber dem Ventilgehäuse mit einer Spannkraft vor.

Das elastische Ventilelement ist vorzugsweise zwischen dem Druckraum und dem Auslasskanal im Bereich einer Ventilöffnung angeordnet, so dass das in dem Druckraum befindliche Druckmedium bei einem Normdruck nicht aus dem Druckraum entweichen kann. Bei einer unzulässigen Druckerhöhung verformt sich das elastische Ventilelement reversibel zu dem Durchlasskanal. Eine unzulässige Druckerhöhung tritt vorzugsweise dann ein, wenn ein Ist-Wert des Drucks größer ist als ein vordefinierter Normdruck. Der Grenzdruck ist erreicht, wenn der Ist-Wert des Drucks in dem Druckraum außerhalb des Normdruckbereichs liegt. Durch den Durchlasskanal kann das Druckmedium von dem Druckraum über den Auslasskanal aus dem Ventilgehäuse entweichen. Hierdurch reduziert sich vorzugsweise der in dem Druckraum herrschende Ist-Druck des Druckmediums von dem Grenzdruck auf den Normdruck. Wenn der Ist-Druck im Druckraum wieder im Bereich des Normdrucks liegt, verformt sich das elastische Ventilelement, so dass der Durchlasskanal verschlossen ist und kein Druckmedium aus dem Druckraum entweichen kann.

Je nach Anwendungsfall kann es notwendig sein, den Grenzdruck zu ändern. Der Grenzdruck wird erhöht, indem die auf das elastische Ventilelement wirkende Spannkraft durch ein Justieren des Spannmechanismus erhöht wird. Um den Grenzdruck zu reduzieren, wird die auf das elastische Ventilelement wirkende Spannkraft durch ein Lockern des Spannmechanismus gemindert. Um den Grenzdruck zu erhöhen, wird die auf das elastische Ventilelement wirkende Spannkraft durch ein Anziehen des Spannmechanismus erhöht. Durch das Einstellen der Spannkraft des Spannmechanismus wird die Druckkraft auf das elastische Ventilelement und somit auch der zur elastischen Verformung notwendige Grenzdruck desselbigen erhöht.

Durch den Spannmechanismus sind vorzugsweise drei verschiedene Druckbereiche einstellbar. Ein niedriger Druckbereich wird durch eine niedrige Spannkraft eingestellt, ein mittlerer Druckbereich durch eine mittlere Spannkraft und ein hoher Druckbereich durch eine hohe Spannkraft. Die Einstellung des Grenzdrucks erfolgt durch den Spannmechanismus auf konstruktiv einfache Art und Weise. Vorzugsweise erfolgt die Einstellung des Grenzdrucks stufenlos.

Vorteilhaft ist es, wenn das elastische Ventilelement entlang einer Stauchachse elastisch stauchbar ist und/oder wenn die Spannkraft, insbesondere die Druckkraft, koaxial zur Stauchachse des elastischen Ventilelements wirkt. Die Stauchachse verläuft vorzugsweise durch den Druckraum und/oder mittig durch die den Druckraum und den Auslasskanal trennende Ventilöffnung. Durch den Spannmechanismus wird vorzugsweise eine Druckkraft reguliert, durch welche der Druck auf das elastische Ventilelement erhöht oder reduziert wird. Wenn die Druckkraft auf das elastische Ventilelement erhöht wird, verringert sich dessen Ausdehnung entlang der Stauchachse. Mit anderen Worten wird das elastische Ventilelement entlang der Stauchachse gestaucht. Wenn die Druckkraft auf das elastische Ventilelement reduziert wird, erhöht sich dessen Ausdehnung entlang der Stauchachse. Das elastische Ventilelement ist entlang der Stauchachse gedehnt. Bei einem niedrig eingestellten Grenzdruck ist die Ausdehnung des Ventilelements entlang der Stauchachse höher als die Ausdehnung des Ventilelements bei einem hoch eingestellten Grenzdruck. Die Elastizität des elastischen Ventilelements ist durch die Druckkraft einfach regulierbar.

Weiterhin ist es von Vorteil, wenn der Spannmechanismus zumindest ein gegenüber dem Ventilgehäuse bewegliches Spannelement aufweist. Das Spannelement ist beweglich und/oder stufenlos gegenüber dem Ventilgehäuse einstellbar. Die Einstellung des Spannelements erfolgt vorzugsweise entlang der Stauchachse. Das Spannelement steht mit dem elastischen Ventilelement in Wirkverbindung, so dass das Verhalten des elastischen Ventilelements infolge einer Änderung der Spannkraft angepasst werden kann. Das Spannelement wird vorzugsweise entlang der Stauchachse in Richtung des Ventilelements oder von diesem weg bewegt, um die Druckkraft auf das elastische Ventilelement zu erhöhen oder zu reduzieren.

Einen weiteren Vorteil stellt es dar, wenn der Spannmechanismus zum Verschieben des Spannelements wenigstens eine zwischen dem Spannelement und dem Ventilgehäuse ausgebildete Schraubverbindung aufweist. Das Spannelement ist vorzugsweise auf einer dem elastischen Ventilelement abgewandten Seite des Ventilgehäuses durch die Schraubverbindung mit diesem verbunden. Die Schraubverbindung wird gelöst oder angezogen, um das Spannelement relativ gegenüber dem elastischen Ventilelement zu bewegen. Das Spannelement ist vorzugsweise derart gegenüber dem elastischen Ventilelement angeordnet, dass die von der Schraubverbindung erzeugte Druckkraft auf das elastische Ventilelement übertragen wird. Zur Erhöhung des den Durchlasskanal freigebenden Grenzdrucks, insbesondere zur Einstellung eines hohen Druckbereichs, wird die Schraubverbindung fester angezogen. Hingegen wird die Schraubverbindung gelöst, um den den Durchlasskanal freigebenden Grenzdruck zu senken, insbesondere zur Einstellung des niedrigen Druckbereichs.

Vorteilhafterweise ist das Spannelement eine Spannschraube und/oder weist das Spannelement ein erstes Gewinde auf, das in ein korrespondierendes zweites Gewinde des Ventilgehäuses eingeschraubt ist. Das erste Gewinde ist vorzugsweise ein Außengewinde. Das zweite Gewinde ist vorzugsweise ein Innengewinde. Das Ventilgehäuse weist das zweite Gewinde vorzugsweise auf seiner dem Druckraum gegenüberliegenden Seite auf. Die Stauchachse verläuft vorzugsweise im Wesentlichen axial durch das elastische Ventilelement und das erste und zweite Gewinde, wenn das Spannelement an dem Ventilgehäuse angeordnet ist. Das Spannelement, insbesondere die Spannschraube, wird gegenüber dem Ventilgehäuse angezogen, um den Druck auf das elastische Ventilelement zu erhöhen. Je höher die Spannkraft und somit auch die Druckkraft auf das elastische Ventilelement ist, umso höher ist auch der Grenzdruck, welcher notwendig ist, damit das elastische Ventilelement den Durchlasskanal freigibt. Da die Spannschraube bzw. das Spannelement lediglich angezogen bzw. gelöst werden muss, um das elastische Ventilelement zu stauchen oder zu strecken, ist das Einstellen des Grenzdrucks auf konstruktiv einfache Weise möglich.

Von Vorteil ist es, wenn das elastische Ventilelement durch die von dem Spannmechanismus erzeugte Spannkraft bei Normdruck gegen eine erste Anschlagsfläche des Ventilgehäuses und/oder eine zweite Anschlagsfläche des Spannmechanismus gedrückt wird. In dem Ventilgehäuse erstreckt sich vorzugsweise der Druckraum bis zu der Ventilöffnung. Im Bereich der Ventilöffnung ist die erste Anschlagsfläche des Ventilgehäuses angeordnet. Das elastische Ventilelement verschließt die Ventilöffnung, indem es an der ersten Anschlagsfläche zumindest zur Auflage kommt. Zum Fixieren des Ventilelements an der ersten Anschlagsfläche wird die zweite Anschlagsfläche gegenüberliegend auf das Ventilelement gedrückt. Durch den Spannmechanismus wird die auf das elastische Ventilelement wirkende Druckkraft eingestellt. Wenn in dem Druckraum ein Grenzdruck herrscht, verformt sich das elastische Ventilelement derart, dass der Durchlasskanal freigegeben ist und das Druckmedium durch diesen hindurch aus dem Druckraum entweichen kann.

Von Vorteil ist es, wenn das Spannelement an seinem dem Ventilelement zugeordneten Ende eine Aufnahmeaussparung aufweist, in der das Ventilelement zumindest teilweise aufgenommen ist. Ein Boden der Aufnahmeaussparung bildet vorzugsweise die zweite Anschlagsfläche. Die Kontaktfläche zwischen dem elastischen Ventilelement und dem Spannelement ist hierdurch derart ausgebildet, dass eine zuverlässige Kraftübertragung erfolgen kann.

Das Spannelement weist vorteilhafterweise einen Bedienbereich auf, über den das Spannelement von einem Benutzer mit einer Verstellkraft beaufschlagbar ist. Der Bedienbereich ist vorzugsweise an einem dem Ventilelement abgewandten Ende des Spannelements angeordnet. Das Spannelement ist vorzugsweise mit einem Verstelldrehmoment beaufschlagbar. Die Verstellkraft, insbesondere der Verstelldrehmoment, gibt die entlang der Stauchachse auf das Ventilelement wirkende Druckkraft vor. Die Verstellkraft wird vorzugsweise durch einen Inbusschlüssel oder Schraubenschlüssen übertragen. Der Bedienbereich ist vorzugsweise leicht zugänglich angeordnet, so dass die Druckkraft und somit der Grenzdruck leicht manuell eingestellt werden können.

Es stellt einen Vorteil dar, wenn das Spannelement in seinem Bedienbereich eine Werkzeugaussparung aufweist. Die Werkzeugaussparung ist vorzugsweise ein Innenmehrkant. Die Werkzeugaussparung ist vorzugsweise an der dem Druckraum gegenüberliegenden Seite des Ventilgehäuses angeordnet. Hierdurch kann der Grenzdruck durch herkömmliche Werkzeuge justiert werden. Hierzu reicht beispielsweise der Einsatz eines hinlänglich bekannten Inbusschlüssels.

Der Durchlasskanal ist bei Grenzdruck vorteilhafterweise zumindest teilweise zwischen dem elastischen Ventilelement und dem Gehäuse, insbesondere der ersten Anschlagsfläche, ausgebildet. Der Durchlasskanal ist bei Normdruck verschlossen, so dass das Druckmedium nicht aus dem Druckraum entweichen kann. Bei einer unzulässigen Druckerhöhung, verformt sich das elastische Ventilelement derart, dass der Durchlasskanal ausgebildet wird. Hierbei wird vorzugsweise ein äußerer Rand des elastischen Ventilelements entgegen der Druckkraft verdrängt, so dass das Druckmedium zwischen dem Ventilgehäuse und dem Ventilelement aus dem Druckraum entweichen kann. Je weiter der Druck in dem Druckraum durch das Entweichen des Druckmediums nachlässt, umso weniger wird das elastische Ventilelement entgegen der von dem Spannmechanismus erzeugten Druckkraft verdrängt. Der Durchlasskanal schließt hierdurch automatisch, wenn der Grenzdruck wieder auf den Normdruck reduziert ist.

Weiterhin ist es von Vorteil, wenn das elastische Ventilelement den Druckraum bei Normdruck von dem Auslasskanal abdichtet und/oder zwischen dem Ventilgehäuse und dem Spannelement ein Dichtelement angeordnet ist. Die Funktion des Sicherheitsventils ist zuverlässig gewährleistet.

Von Vorteil ist es, wenn der Auslasskanal schräg, insbesondere lotrecht zum Druckraum und der Stauchachse verläuft. Der Auslasskanal ist vorzugsweise entlang der Stauchachse zwischen der ersten und zweiten Anschlagsfläche angeordnet. Der wenigstens eine Auslasskanal ist vorzugsweise entlang der Stauchachse in einem dem Druckraum abgewandten Bereich des Ventilgehäuses angeordnet. Die Modifizierung des Sicherheitsventils ist bauraumsparend realisiert.

Weitere Vorteile der Erfindung sind in den nachfolgenden Ausführungsbeispielen beschrieben. Es zeigen:
- **Figur 1**: ein Sicherheitsventil mit einem elastischen Ventilelement bei Normdruck in einer Schnittdarstellung und
- **Figur 2**: ein Sicherheitsventil mit einem elastischen Ventilelement bei Grenzdruck in einer Schnittdarstellung.

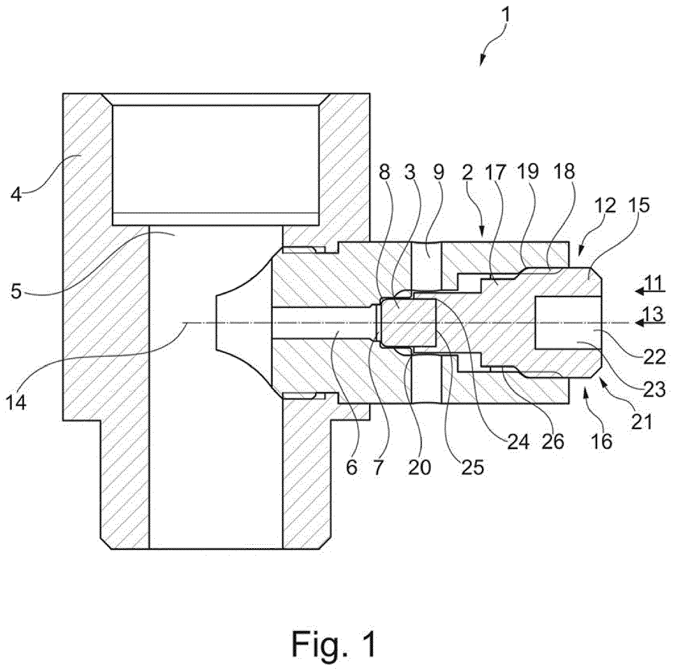

Figur 1 zeigt ein Sicherheitsventil 1 mit einem Ventilgehäuse 2 und einem elastischen Ventilelement 3. Das Sicherheitsventil 1 ist mit einem Rohr 4 einer nicht dargestellten Sanitärarmatur verbunden. Ein Hohlraum 5 des Rohres 4 ist mit einem Druckmedium gefüllt und steht unter Druck. Das Sicherheitsventil 1 sorgt dafür, dass aus dem Hohlraum 5 ein Teil des Druckmediums ausgelassen werden kann, wenn in dem Hohlraum 5 ein definierter Grenzdruck überschritten wird. Hierzu ist ein Druckraum 6 des Sicherheitsventils 1 unmittelbar mit dem Hohlraum 5 verbunden. In dem Druckraum 6 des Sicherheitsventils 1 und dem Hohlraum 5 des Rohrs 4 herrscht der gleiche Druck.

An den Druckraum 6 des Ventilgehäuses 2 grenzt eine Ventilöffnung 7 an. Die Ventilöffnung 7 ist von dem elastischen Ventilelement 3 dicht verschlossen. Im Bereich der Ventilöffnung 7 weist das Ventilgehäuse 2 eine erste Anschlagsfläche 8 auf. Das elastische Ventilelement 3 ist gegen die erste Anschlagsfläche 8 gepresst, um die Ventilöffnung 7 abzudichten, wenn in dem Druckraum 6 ein Normdruck herrscht.

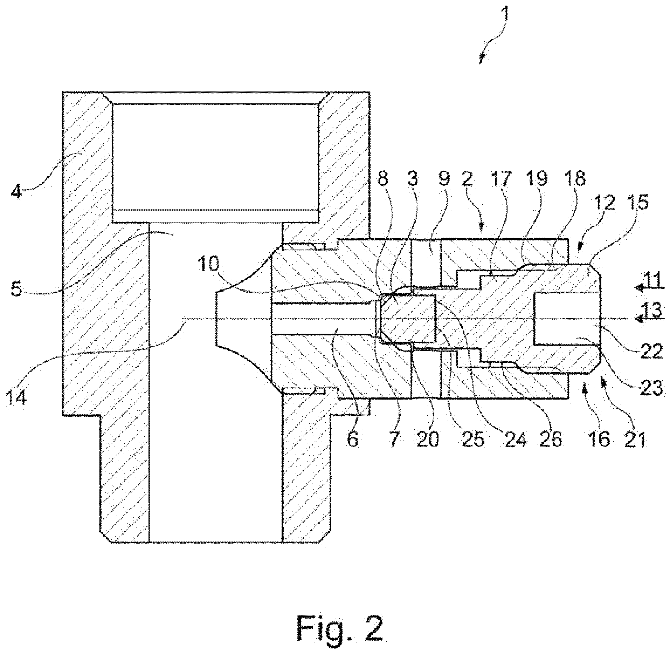

Um bei einem Grenzdruck das Druckmedium aus dem Druckraum 6 auslassen zu können, weist das Ventilgehäuse 2 einen Auslasskanal 9 auf. Der Auslasskanal 9 und der Druckraum 6 sind bei Normdruck durch das elastische Ventilelement 3 voneinander getrennt. Wenn ein definierter Grenzdruck erreicht ist, verformt sich das elastische Ventilelement 3 unter Freigabe eines Durchlasskanals 10 (vgl. Fig. 2). Durch die Einstellung einer auf das elastische Ventilelement 3 wirkenden Spannkraft 13, ist der Grenzdruck definierbar, ab welchem das Druckmedium aus dem Druckraum 6 entlassen werden kann.

Um die Druckkraft 11 und dadurch den Grenzdruck einstellen zu können, weist das Sicherheitsventil 1 einen Spannmechanismus 12 auf. Der Spannmechanismus 12 spannt das Ventilelement 3 gegenüber dem Ventilgehäuse 2 mit einer Spannkraft 13 vor. Das elastische Ventilelement 3 ist durch den Spannmechanismus 12 und die von diesem erzeugte Druckkraft 11 entlang einer Stauchachse 14 stauchbar. Zum Einstellen der Druckkraft 11 auf das Ventilelement 3 weist der Spannmechanismus 12 ein Spannelement 15 auf, welches entlang der Stauchachse 14 beweglich ist.

Das Spannelement 15 ist eine Schraubverbindung 16. Das Spannelement 15 ist vorzugsweise eine Spannschraube 17. Das Spannelement 15 weist ein erstes Gewinde 18, insbesondere ein Außengewinde, auf. Das erste Gewinde 18 des Spannelements 15 ist in ein zweites Gewinde 19 des Ventilgehäuses 2 geschraubt, so dass eine zweite Anschlagsfläche 20 des Spannelements 15 mit dem elastischen Ventilelement 3 verbunden ist. Die zweite Anschlagsfläche 20 drückt gegen das elastische Ventilelement 3. Je nachdem mit welcher Druckkraft 13 der Spannmechanismus 12 gegen das Ventilelement 3 drückt, ist dieses entlang der Stauchachse 14 gestaucht oder gestreckt.

Je höher die von dem Spannmechanismus 12 erzeugte Spannkraft 13 und damit die Druckkraft 11 auf das Ventilelement 3 ist, umso höher muss der Grenzdruck in dem Druckraum 6 sein, damit dieses den Durchlasskanal 10 (vgl. Fig. 2) freigibt.

Um den Grenzdruck zur Ausbildung des Durchlasskanals 10 manuell einstellen zu können, weist das Spannelement 15 an seinem dem Ventilelement 3 abgewandten Ende einen Bedienbereich 21 auf. Über den Bedienbereich 21 ist das Spannelement 15 von einem Benutzer mit einer Verstellkraft beaufschlagbar. Hierzu weist der Bedienbereich 21 eine Werkzeugaussparung 22 auf. Die Werkzeugaussparung 22 ist ein Innenmehrkant 23.

Um einen sicheren Halt des Spannelements 15 an dem Ventilelement 3 zu gewährleisten, weist das Spannelement 15 auf seiner dem Ventilelement 3 zugewandten Seite eine Aufnahmeaussparung 24 auf. Das Ventilelement 3 ist zumindest teilweise in der Aufnahmeaussparung 24 aufgenommen. Die Aufnahmeaussparung 24 und/oder ein Boden 25 des Spannelements 15 bilden zumindest teilweise die zweite Anschlagsfläche 20 zur Druckausübung auf das Ventilelement 3 aus. Zwischen dem elastischen Ventilelement 3 und dem Spannelement 15 ist bei Bedarf ein zusätzliches Dichtelement 26 angeordnet.

Figur 2 zeigt das Sicherheitsventil 1, wobei das elastische Ventilelement 3 infolge des Erreichens des Grenzdrucks den Durchlasskanal 10 freigibt. Der Durchlasskanal 10 ist zwischen dem Ventilgehäuse 2 und dem elastischen Ventilelement 3 ausgebildet. Wenn infolge des Auslassens des Druckmediums aus dem Druckraum 6 wieder der Normdruck erreicht ist, dichtet das elastische Ventilelement 3 die Ventilöffnung 7 wieder automatisch gemäß der Fig. 1 ab.

### Bezugszeichenliste

- 1: Sicherheitsventil
- 2: Ventilgehäuse
- 3: elastisches Ventilelement
- 4: Rohr
- 5: Hohlraum
- 6: Druckraum
- 7: Ventilöffnung
- 8: Erste Anschlagsfläche
- 9: Auslasskanal
- 10: Durchlasskanal
- 11: Druckkraft
- 12: Spannmechanismus
- 13: Spannkraft
- 14: Stauchachse
- 15: Spannelement
- 16: Schraubverbindung
- 17: Spannschraube
- 18: Erstes Gewinde
- 19: Zweites Gewinde
- 20: Zweite Anschlagsfläche
- 21: Bedienbereich
- 22: Werkzeugaussparung
- 23: Innenmehrkant
- 24: Aufnahmeaussparung
- 25: Boden
- 26: Dichtelement

## Patentansprüche

1. Sicherheitsventil (1), insbesondere für eine Sanitärarmatur, mit einem Ventilgehäuse (2), das einen Druckraum (6) und einen Auslasskanal (9) aufweist, und
einem elastischen Ventilelement (3), das den Druckraum (6) und den Auslasskanal (9) bei einem druckraumseitigen Normdruck eines Druckmediums voneinander trennt und bei Druckerhöhung derart elastisch verformbar ist, dass dieses bei einem Grenzdruck des Druckmediums einen den Druckraum (6) mit dem Auslasskanal (9) verbindenden Durchlasskanal (10) freigibt,
**dadurch gekennzeichnet,**
**dass** das Sicherheitsventil (1) einen Spannmechanismus (12) zum Einstellen des Grenzdrucks aufweist, der das elastische Ventilelement (3) gegenüber dem Ventilgehäuse (2) mit einer Spannkraft (13) vorspannt.

2. Sicherheitsventil nach dem vorherigen Anspruch, **dadurch gekennzeichnet, dass** das elastische Ventilelement (3) entlang einer Stauchachse (14) elastisch stauchbar ist und/oder
die Spannkraft (13), insbesondere eine Druckkraft (11), koaxial zur Stauchachse (14) des elastischen Ventilelements (3) wirkt.

3. Sicherheitsventil nach einem der vorherigen Ansprüche, **dadurch gekennzeichnet, dass** der Spannmechanismus (12) zumindest ein gegenüber dem Ventilgehäuse (2), insbesondere entlang der Stauchachse (14), bewegliches und/oder stufenlos einstellbares Spannelement (15) aufweist.

4. Sicherheitsventil nach einem der vorherigen Ansprüche, **dadurch gekennzeichnet, dass** der Spannmechanismus (12) zum Verschieben des Spannelements (15) wenigstens eine zwischen dem Spannelement (15) und dem Ventilgehäuse (2) ausgebildete Schraubverbindung (16) aufweist.

5. Sicherheitsventil nach einem der vorherigen Ansprüche, **dadurch gekennzeichnet, dass** das Spannelement (15) eine Spannschraube (17) ist und/oder
ein erstes Gewinde (18), insbesondere ein Außengewinde, aufweist, das in ein korrespondierendes zweites Gewinde (19), insbesondere ein Innengewinde, des Ventilgehäuses (2) eingeschraubt ist.

6. Sicherheitsventil nach einem der vorherigen Ansprüche, **dadurch gekennzeichnet, dass** das elastische Ventilelement (3) durch die von dem Spannmechanismus (12) erzeugte Spannkraft (13) bei Normdruck gegen eine erste Anschlagsfläche (8) des Ventilgehäuses (2) und/oder eine zweite Anschlagsfläche (20) des Spannmechanismus (12) gedrückt ist.

7. Sicherheitsventil nach einem der vorherigen Ansprüche, **dadurch gekennzeichnet, dass** das Spannelement (15) an seinem dem elastischen Ventilelement (3) zugeordneten Ende eine Aufnahmeaussparung (24) aufweist, in der das Ventilelement (3) teilweise aufgenommen ist und/oder
ein Boden (25) der Aufnahmeaussparung (24) die zweite Anschlagsfläche (20) bildet.

8. Sicherheitsventil nach einem der vorherigen Ansprüche, **dadurch gekennzeichnet, dass** das Spannelement (15), insbesondere an seinem dem elastischen Ventilelement (3) abgewandten Ende, einen Bedienbereich (21) aufweist, über den das Spannelement (15) von einem Benutzer mit einer Verstellkraft, insbesondere einem Verstelldrehmoment, beaufschlagbar ist.

9. Sicherheitsventil nach einem der vorherigen Ansprüche, **dadurch gekennzeichnet, dass** das Spannelement (15) in seinem Bedienbereich (21) eine Werkzeugaussparung (22), insbesondere mit einem Innenmehrkant (23), aufweist.

10. Sicherheitsventil nach einem der vorherigen Ansprüche, **dadurch gekennzeichnet, dass** der Durchlasskanal (10) bei Grenzdruck zumindest teilweise zwischen dem elastischen Ventilelement (3) und dem Ventilgehäuse (2), insbesondere der ersten Anschlagsfläche (8), ausgebildet ist.

11. Sicherheitsventil nach einem der vorherigen Ansprüche, **dadurch gekennzeichnet, dass** das elastische Ventilelement (3) den Druckraum (6) bei Normdruck von dem Auslasskanal (9) abdichtet und/oder
zwischen dem Ventilgehäuse (2) und dem Spannelement (15) ein Dichtelement (26) angeordnet ist.

12. Sicherheitsventil nach einem der vorherigen Ansprüche, **dadurch gekennzeichnet, dass** der Auslasskanal (9) schräg, insbesondere lotrecht, zum Druckraum (6) und Stauchachse (14) verläuft.
